# EUROPEAN PATENT APPLICATION

(11) **EP 0 967 804 A2**
(43) Date of publication of application: **29.12.1999**
(21) Application number: 99304652.3
(22) Date of filing: 15.06.1999
(51) Int. Cl.: H04N 7/24

(54) **Information distribution system**

(30) Priority: 26.06.1998 US 90879 P; 30.10.1998 US 183249
(71) Applicant: Sarnoff Corporation, Princeton, NJ 08540-6449 (US)
(72) Inventor: Anderson, Bruce James, Chesterfield NJ 08620 (US); Reitmeier, Glenn Arthur, Yardley PA 19067 (US)
(74) Representative: Pratt, Richard Wilson

(57) **Abstract**

A method for multiplexing and demultiplexing commercial and program material within the context of, e.g., an MPEG1 or MPEG2 information distribution system. A system employing the method provides either a single terrestrial broadcast channel or a "virtual head-end" as part of an uplink site which encodes advertising materials, associates the advertising material with "tags" indicative of demographic or content categorisation affinity, and provides the tagged advertising material, along with program material to one or more information consumers.

## Description

The present invention relates to an information distribution system. An illustrative embodiment of the present invention relates to an information distribution system and more particularly to providing different commercial messages to different demographically targeted subscribers, consumers or users of the information distribution systems. Illustrative method and apparatus embodiments of the present invention are described.

In order to more efficiently utilise advertising dollars, advertisers are willing to pay a premium for demographically targeted advertising. As such, systems have been devised which allow such advertisers to target a group or groups demographically appropriate to a particular product and/or service provided by an advertiser.

In one such system, disclosed in U.S. patent 5,155,591, issued October 13, 1992 to Wachob, subscribers to a cable television system enter demographic data into the disclosed system via a remote control device. The disclosed system provides two channels containing commercial messages. In response to demographic data entered by a particular subscriber, one of the two commercial channels is selected and coupled to the subscriber. Each subscriber selects one of the two available advertising signals for viewing.

In another such system, disclosed in U.S. patent 5,661,516, issued August 26, 1997 to Carles, a server, located on a network, selectively sends commercial messages to demographically categorised subscriber households using the terminal address of the subscriber. The transmitted message is received and displayed by the subscriber's equipment. The targeted terminals are selected based on information stored in a database. Each subscriber receives a unique advertising stream.

Unfortunately, the above systems are cumbersome and/or expensive to implement. Therefore, it is seen to be desirable to provide demographically targeted advertising within an information distribution system in a manner that does not require fully dedicated advertising streams for each subscriber. Additionally, it is seen to be desirable to provide demographically targeted programming such as news (e.g., upscale financial emphasis or "regular guy" sports emphasis) and other programming (e.g., adult or other content).

Aspects of the present invention are set out in the claims to which attention is invited. An embodiment of the present invention seeks to provide a method for multiplexing and demultiplexing commercial and program material within the context of, e.g., an MPEG1 or MPEG2 information distribution system. A system employing the method provides either a single terrestrial broadcast channel or a "virtual head-end" as part of an uplink site which encodes advertising materials, associates the advertising material with "tags" indicative of demographic or content categorisation affinity, and provides the tagged advertising material, along with program material to one or more information consumers.

Specifically, in a digital television receiver, a method according to an embodiment of the present invention comprises the steps of: selecting, for presentation, one of a plurality of available television programs, the selected television program temporally divided into a commercial portion and a program portion, the commercial portion including a plurality of commercial streams, at least a portion of the commercial streams including indicia of demographic affinity; comparing, to a demographic profile, the indicia of demographic affinity of the commercial streams including indicia of demographic affinity; selecting, for presentation during the commercial portion of the selected television program, a commercial stream having indicia of demographic affinity appropriate to the demographic profile; the selected television program and the selected commercial stream being aligned in a manner enabling a relatively seamless transition between streams.

For a better understanding of the present invention, reference will now be made by way of example to the accompanying drawings in which:
FIG. 1 depicts an information distribution system according to an embodiment of the invention;
FIG. 2 depicts a graphical representation of a temporal alignment of a plurality of programming streams and commercial streams suitable for use in the information distribution system of FIG. 1;
FIG. 3 depicts a flow diagram of the routine suitable for use in an information receiver or set top terminal according to an embodiment of the present invention and suitable for use in the information distribution system 100 of FIG. 1;
FIG. 4A depicts a flow diagram of a routine suitable for use in a head end module according to an embodiment of the present invention and suitable for use in the information distribution system 100 of FIG. 1;
FIG. 4B depicts a flow diagram of a routine suitable for use in an information server according to an embodiment of the present invention and suitable for use in the information distribution system 100 of FIG. 1;
FIG. 5 depicts a broadcast information distribution system according to an embodiment of the present invention; and
FIG. 6 depicts a flow diagram of a routine suitable for use in an information receiver or set top terminal according to an embodiment of the present invention.

To facilitate understanding, identical reference numerals have been used, where possible, to designate identical elements that are common to the figures.

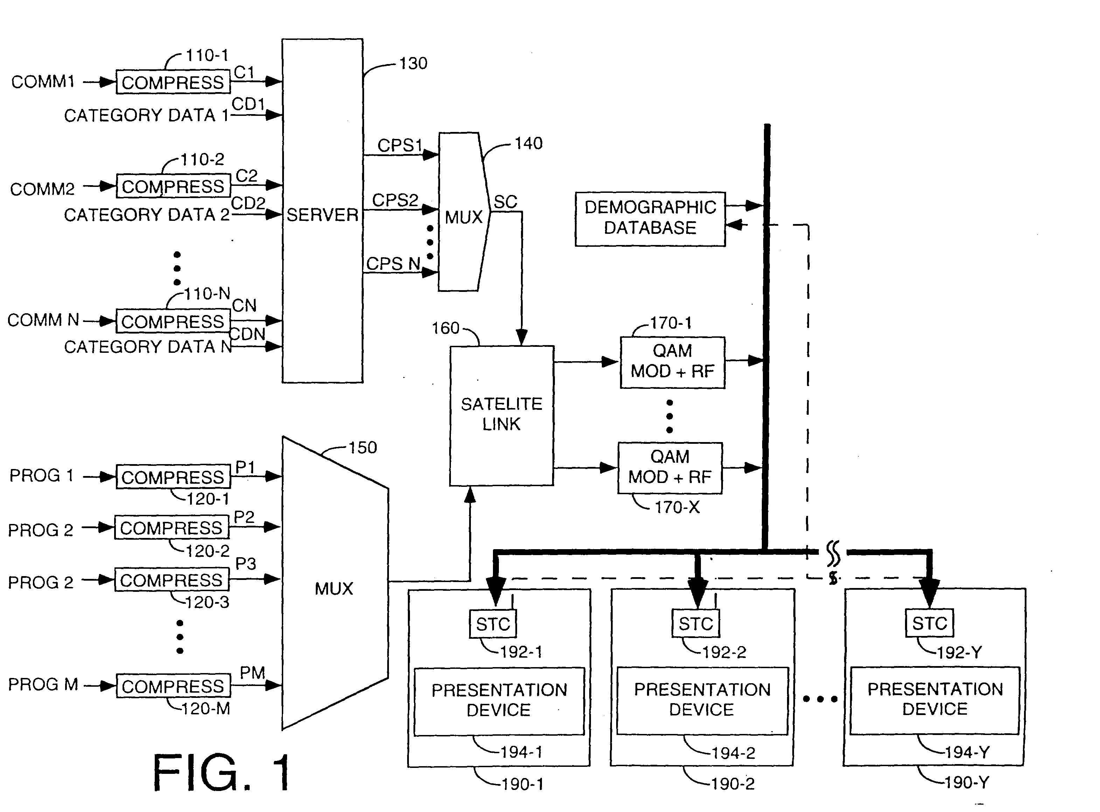

FIG. 1 depicts an information distribution system 100 according to an embodiment of the present invention. Specifically, the information distribution system 100 comprises a plurality of compression modules 110-1 through 110-N, and 120-1 through 120-M, a server 130, a first multiplexer 140, a second multiplexer 150, a satellite link 160, a plurality of cable head-ends 170-1 through 170-X, a database 180 and a plurality of set top controllers 192-1 through 192-Y and associated presentation devices 194-1 through 194-Y.

Each of the compression modules 110-1 through 110-N receives and compresses a respective commercial or advertising stream to produce a corresponding compressed commercial or advertising stream. Each of the compressed advertising streams or commercial streams C1 through CN produced by the compression modules 110-1 through 110-N is associated with a category data stream indicative of one or more demographic profiles targeted by the commercial or advertising content within the commercial or advertising stream. Server 130 receives and stores each compressed commercial or advertising stream and its respective category data. Server 130 provides the stored compressed commercial or advertising streams, including category indicative tags based upon the respective category data, to first multiplexer 140 as a plurality of command program streams CPS-1 through CPS-N. First multiplexer 140 multiplexes the received commercial or advertising streams, illustratively MPEG2 packetized elementary streams (PES) or transport streams, to produce a first multiplexed stream SC, illustratively an MPEG2 system stream SC that is coupled to satellite link 160.

Compression modules 120-1 through 120-M receive and compress respective program streams PROG1 through PROGM. The compressed program streams, illustratively video and audio associated with e.g. movies, television shows and the like are coupled to second multiplexer 150. Second multiplexer 150 produces an output stream SP, illustratively an MPEG2 compliant system stream, that is coupled to satellite link 160. It should be noted that satellite link 160 may comprise a satellite link, a terrestrial link such as a high speed fibre optic link or a public telecommunications link or a link utilising transmitted radio waves. Satellite link 160 couples the advertising system stream SC and the program system stream SP to one or more of the plurality of cable head-ends 170-1 through 170-X, or other local dissemination systems such as terrestrial broadcast and the like. Satellite link 160 functions as a "virtual head-end".

Specifically, satellite link 160 operates as a common information distribution point to all of the cable head-ends 170-1 through 170-X. Thus, demographic information relating to targeted geographic location of subscribers or consumers may be used at the "virtual head-end" to specifically apply different profile information for an advertisement is a different region of the country and/or the world. For example, a regional fast food franchise may target people within the pacific northwest having a specific household income and satisfying other criteria indicative of potential consumers at the fast food franchise. The same fast food franchise advertisement may be applicable to a different demographic profile within a different geographic region. Thus, the advertisement is associated with a demographic profile that changes depending on where the advertisement is shown, as well as who sees the advertisement. In addition, by providing a geographic allocation of bandwidth, additional advertising streams may be provided to other geographic regions at the same time.

Cable head-ends 170-1 through 170-X modulate using, illustratively, a quadrature amplitude modulation (QAM) or other appropriate modulation scheme and RF modulation scheme to place the received advertising and program streams onto appropriate RF channels for coupling to set top terminals within the cable system served by the particular head-end module.

Each of the set top terminals 190-1 through 190-Y are associated with demographic data and, optionally, user data. The demographic data is associated with "tags" included within the compressed advertising streams that are based upon the category data. Thus, a set top terminal associated with a particular demographic profile retrieves commercial or advertising streams including tags associated with that demographic profile, if such streams are available. In the absence of such streams, the set top terminal retrieves a default commercial stream, illustratively a commercial stream included within the initial program stream or one of a plurality of default streams, optionally including the tagged commercial stream (i.e., the default stream presented to a viewer may change based upon demographic or other data).

In one embodiment of the invention, in the case of the time period allocated to commercial content within the program stream exceeding the length (i.e., run time) of the commercial within the commercial stream, the set top terminal continues playing the presently selected commercial stream or selects an alternate commercial bit stream. In the case of the time period allocated to commercial content not exceeding the length of the commercial, the set top terminal re-enters the program stream while, e.g., a commercial within the program stream itself is in progress.

Optionally, the set top terminal transmits, via a back channel, usage or response data to database 180. Usage data may comprise, e.g., additional data entered by the user via a remote control device such as age, occupation, gender, interests and the like. Additionally, usage data may be gathered by the set top terminal automatically. Such automatically gathered usage data comprises, e.g., the length of time spent by a user watching a particular program, the channel selected and the time of selection, and, e.g., any correlations between heavily watched content and demographic profile information with a view to updating that profile information, and other user data. Usage data may also provide confirmation of which advertisements were selected and viewed. For example, did the user "mute" the advertisement or change the channel when the tagged advertisement was selected for presentation? Such information is extremely useful in refining the demographic model associated with a particular user or group of users.

Such usage data may or may not be effective in refining a demographic profile for a set top terminal, since several of a single family may be using that set top terminal. However, in the case of a system requiring user identification prior to accessing certain programming, the usage data may be correlated to a particular user and, therefore, the usage data may provide valuable insight as to the likes and dislikes of a particular user. Moreover, such usage data gathered on a global scale by the cable company provides valuable information useful in refining demographic databases such that advertising may be more closely focused to particular clients and/or clients of the advertisers. This focusing or refining may be performed using a plurality of data sets in a manner that provides a "data mining" affinity system, whereby subtle correlations between users, user data, and program selection are recorded and analysed to produce a systematically refined demographic profile.

Database 180 functions as both a demographic database and a response database. The demographic database function comprises the storage of information related to the demographic and content categonsation of at least the region served by the head end. The demographic and content categorisation information may be used to modify demographic and content categorisation information included within commercial streams processed by the head end prior to sending the streams to subscribers or users served by the head end.

The response database function of the database 180 comprises information related to the actions of subscribers or uses. For example, the response database function stores information indicative of the response of subscribers to particular commercial stream (e.g., change the channel, mute the audio, complain to the information provider about the content and the like). The response database may be used to further refine the demographic profile of subscribers by noting the type of commercial content that is viewed, the time this content is viewed, the response to the content and the like. Such refinement of individual demographic profiles also enables the system to better predict aggregate or regional demographic data, thereby enhancing the ability of the system to appropriately insert regional commercial streams. For example, the content or demographic tagging of regional commercial streams may be refined or redefined based on the individual or aggregated demographic profile information stored in the database 180.

Most preferably the picture displayed on a user's display device, e.g. a television screen, should be substantially flawless. That is, when splicing various information streams together such as program streams and commercial or advertising streams, the actual video and audio splicing operations must be performed in a manner that is not visually or aurally disagreeable to the information consumer or subscriber viewing and listening to the information. To that end, first multiplexer 140 and second multiplexer 150 include stream alignment capabilities for preserving lip sync (e.g., as disclosed in U.S. Patent Application No. 08/864,321, filed May 28, 1997, a copy of which is filed with this application and is available in the dossier of this application.

At times, to ensure suitable alignment of the various information streams, it may be advisable to increase or decrease the play back rate of a particular stream. For example, it is known to speed up the playback of a taped production stream by playing a tape faster than normal. It has been determined that a 3% increase in playback speed of a 30 minute television program provides a 60 second increase in the amount of time available for advertising without negatively impacting a users viewing experience. Thus, additional advertising space may be sold and/or advertising stream entrance and exits may be more carefully coordinated at the head-end. A frame processing method and apparatus suitable for performing such frame synchronisation is disclosed in U.S. Patent Application No. 08,910,196, filed 8/13/97 (attorney docket no. 12373), Corresponding to EP Application No. 98306389.2, EP Publication No. 0 897 245.

To provide a maximal level of demographic targeting to an advertiser, it is desirable to provide a means of providing one of a relatively large number of demographically appropriate commercials to each subscriber or consumer within a system providing a potentially large number of programs. It is also desirable to reduce the amount of memory required to buffer streams to a set top terminal prior to switching between streams. As such, the system of FIG.1 compresses both commercial material in a program material and manner allowing the rough temporal alignment of splice points. That is, suitable exit points within a compressed information stream (e.g., a program stream) are temporally aligned with suitable entry points within a compressed commercial stream (e.g., an advertising stream)

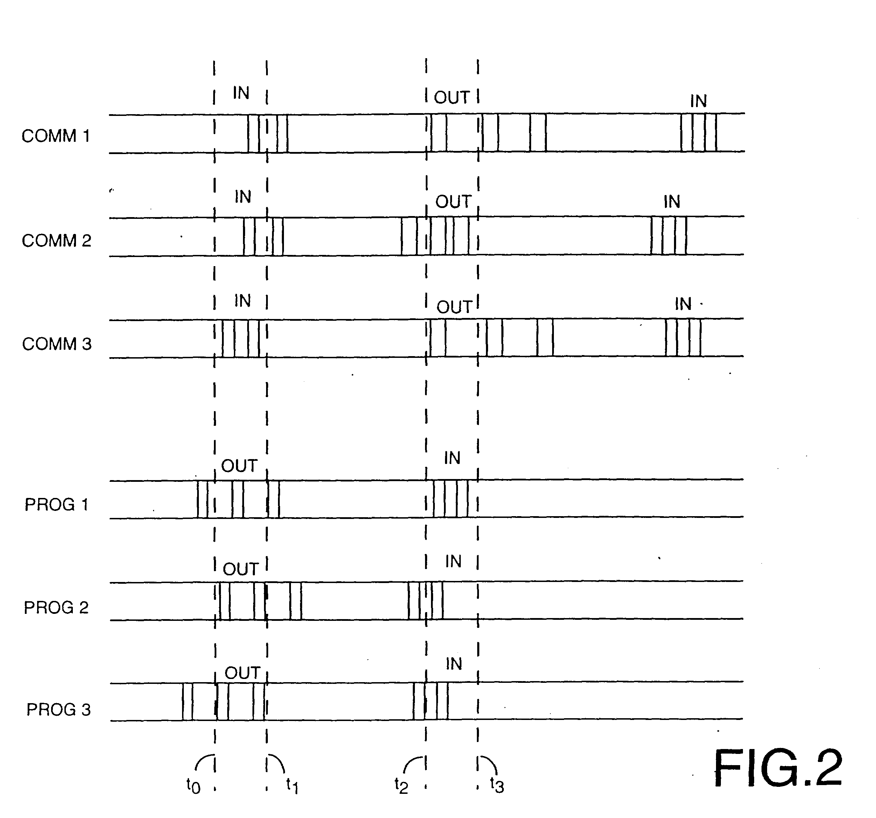

FIG. 2 depicts a bit stream timing diagram useful in understanding the alignment aspect of the present invention. Specifically, FIG. 2 depicts six bit streams denoted as COMM1, COMM2, COMM3, PROG1, PROG2 and PROG3. The first three rows, COMM1-COMM3, represent commercial or advertisement bit streams. Each of the bit streams includes a plurality of in-points and of plurality of out-points. The in-points are those points within the bit stream that are suitable for use in entering the bit stream. The out-points are those points in the bit stream that are suitable for use in exiting the bit stream. Bit streams are entered and exiting within the context of, e.g., a multiplexed or spliced bit stream environment. For example, U.S. patent application serial number 08/864,322, filed on May 28, 1997 for a METHOD AND APPARATUS FOR SPLICING COMPRESSED INFORMATION STREAMS corresponding to EP Application No. 97929747.0, EP Publication No. 0 901 718 (herein incorporated by a reference in its entirety) discloses various methods and apparatus for splicing compressed information streams such as MPEG video streams. Additionally, U.S. patent application serial number 08/996,871 filed on December 23, 1997 for INFORMATION STREAM SYNTAX FOR INDICATING THE PRESENCE OF A SPLICE POINT corresponding to PCT Publication No. WO 98/32281, (herein incorporated in a reference in its entirety) discloses suitable methods for indicating the presence of a splice point such as in-point or an out-point in a video stream such as an MPEG-like video stream.

Each of the three program streams, PROG1, PROG2 and PROG3, comprise, e.g., a video program. A set top terminal receiving a particular video program, e.g., PROG1 is associated with a demographic profile or other user data. Depending upon the demographic profile or other user data, one of the plurality of commercial information streams will be spliced into the information stream that is eventually decoded by the set top terminal.

Referring to FIG. 2, each of the program streams, PROG1-PROG3, are intended to provide a commercial message beginning at a time between T₀ and T₁ and ending at a time between T₂ and T₃. That is, each of the three program streams includes splicing exit points or out-points coarsely aligned with the T₀ to T₁ time frame, and stream entrance points or in-points coarsely aligned with the T₂ to T₃ time point. Similarly, commercial streams COMM1 -COMM3 include stream entrance points, or in-points, coarsely aligned with the T₀ to T₁ time range. Commercial streams COMM1-COMM3 also include out-points or stream exit points coarsely aligned with the T₂ through T₃ time period. To assist in the alignment of various bit streams, multiple in-points and/or out-points may be included in the respective bit streams.

As depicted in FIG. 2, two in-points are roughly co-located and three out-points are roughly co-located in the various streams. More or less in-points and out-points may be used. It must be noted that the depiction of a particular number of co-located in-points or out-points is not intended to be limiting in any way. Rather, it is only important that the in-points and out-points are able to be aligned for purposes of switching between the streams. It is noted by the inventor that appropriate stream buffering and buffering management may be used to align the various streams during a stream witching or splicing operation. In this manner seamless or relatively seamless stream switching may be provided.

For example, assuming a viewer is viewing PROG1, and the viewer's demographic profile indicates that COMM2 is most appropriate commercial stream, the viewer's set top terminal exits the PROG1 stream during the T₀ to T₁ time period and enters the COMM2 bit stream during the same period. Between T₁ and T₂ the commercial is viewed by the subscriber or consumer. Between the T₂ and T3 time period the COMM2 bit stream is exited, and the PROG1 bitstream is re-entered. In this manner, an advertising or commercial stream, e.g., COMM2 may be utilised by a large number of subscribers or consumers who happen to fit a particular demographic profile or profiles. Moreover, by roughly aligning the various stream entrance and exit points within the program streams and the advertising or commercial streams, seamless or relatively seamless splicing may be performed at the decoder side. Optionally, such seamless or substantially seamless splicing may be performed at the local head-end, e.g. head-end 170-1 or 170-X of FIG. 1.

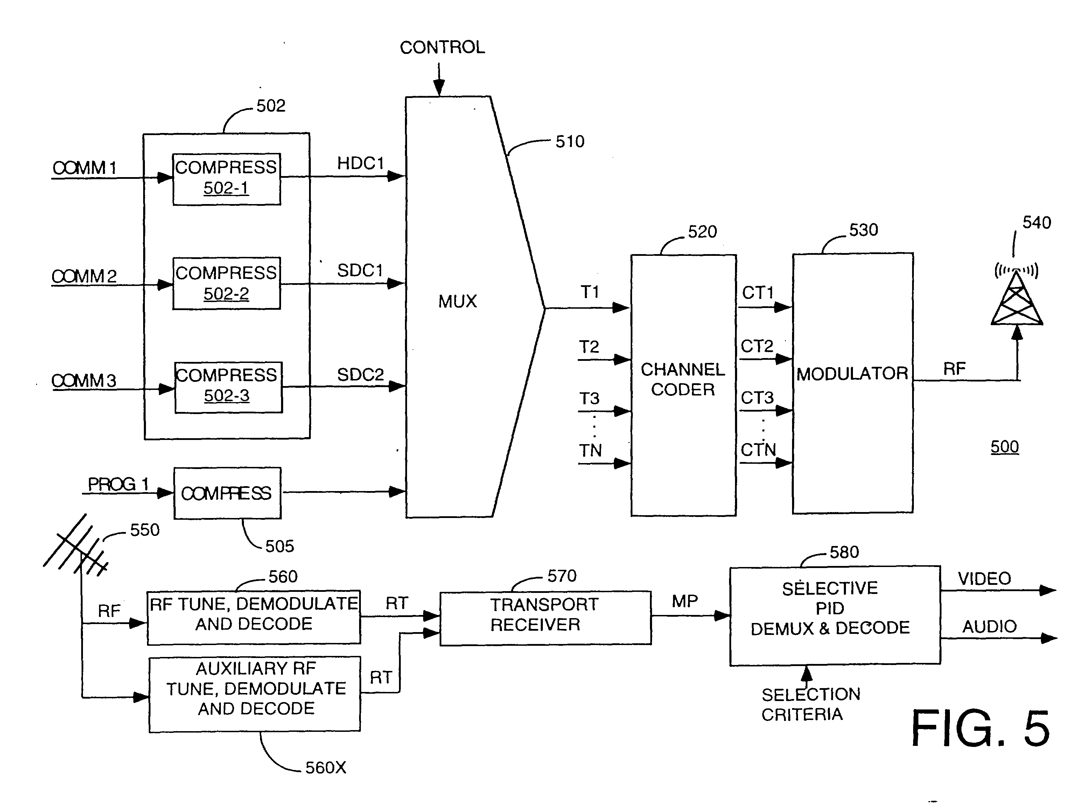

It is noted that the depictions of commercial streams COMM1 through COMM3 indicate that the bandwidth requirement for the commercial streams are equivalent to the bandwidth requirement for the program streams PROG1 through PROG3. This is not a requirement to practice the invention. For example, in one embodiment of the invention which will be discussed below in respect to FIG. 5, each the commercial streams utilise less bandwidth than the program streams. Moreover, a plurality of commercial streams may be multiplexed together such that a program stream including commercial information may include commercial information associated with a plurality of commercials. In this manner, selection of commercials does not require changing between physical or logical transport streams. Rather, selection of commercials merely requires selecting the packet identification (PID) associated with a desired commercial stream included within the same stream as the program stream and, therefore, substantially synchronised to the program within that program stream.

In one embodiment of the invention, a plurality of logical streams are carried on a plurality of physical channels. In this embodiment, additional subscriber tuners are advantageously employed to provide more accurate selection due to the availability of additional commercial streams. That is, there is a greater likelihood of receiving a demographically appropriate commercial stream since there is a greater number of streams received. This embodiment will be discussed in more detail below with respect to FIG. 5.

Briefly, rather than demultiplexing and decoding a plurality of commercial streams arranged as logical streams on a single physical channel, this embodiment contemplates the use of a larger plurality of commercial streams arranged as logical streams on more than one physical channel. A suitable receiver is capable of decoding and examining each of the physical channels at substantially the same time (i.e., select a commercial stream in a relatively rapid manner, regardless of physical channel). The receiver may use a single tuner that rapidly acquires and identifies the various tagged streams or, in a preferred embodiment, utilises more than one tuner such that the high latency portion of the stream acquisition process (i.e., tuning and demultiplexing the physical channel) is avoided.

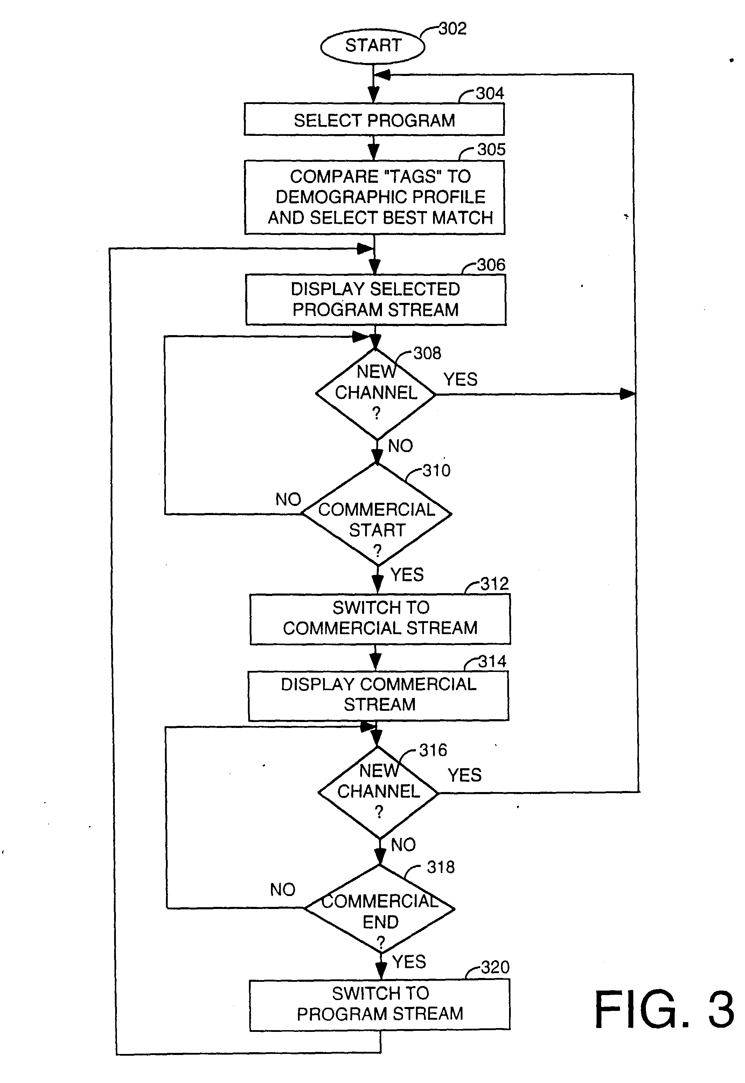

FIG. 3 depicts a flow diagram of the routine 300 suitable for use in an information receiver or set top terminal according to an embodiment of the present invention and suitable for use in the information distribution system 100 of FIG. 1. Specifically, FIG. 3 depicts a flow diagram of a routine 300 suitable for use in, illustratively, a set top terminal (e.g., 192-1 through 192-Y) suitable for use in the information distribution system 100 of FIG. 1.

The routine 300 is entered at step 302 and proceeds to step 304. At step 304 a program stream is selected. The program stream is selected in response to, e.g., viewer or subscriber manipulations of channel indicative keys on a remote control device. The routine 300 then proceeds to step 305.

At step 305 a commercial stream is selected. The commercial stream is selected automatically in response to a demographic affinity between the viewer (or at least the set top terminal or receiver profile) and one or more providers of commercial or advertising streams. For example, in one embodiment of the invention, the set top terminal retrieves commercial or advertising streams including tags associated with a particular demographic profile if such streams are available. Thus, at step 305 the set top terminal identifies which, if any, commercial or advertising streams comprise the best match to the demographic profile of the user or set top terminal. In the absence of an appropriate commercial stream (e.g., no match per the available tags) the default commercial stream is used. The default commercial stream comprises the commercial stream integrated into the program stream that has been selected. In this case there is no switching between streams, as will be discussed below. The routine 300 then proceeds to step 306.

At step 306 the selected program stream is decoded and displayed on, e.g., a presentation device such as a television set or other display device associated with the set top terminal. The routine 300 then proceeds to step 308.

At step 308 a query is made as to whether a new channel has been selected by the viewer. That is, a query is made as to whether the user of the set top terminal has changed the desired program from the presently selected program to another program. If the query at step 308 is answered affirmatively, then the routine 300 proceeds to step 304 where the new program is selected and to step 305 where, if necessary, a new commercial stream (SN) stream is selected. If the query at step 308 is answered negatively, then the routine 300 proceeds to step 310.

At step 310 a query is made as to whether a commercial starting point within the presently selected program stream is approaching or imminent. The approach of a commercial starting point within the program stream may be indicated by, e.g., a splice point count down flag according to the MPEG, ATSC, or DTV standards or other splice point indicia (i.e., splice out-points). Additionally, a commercial starting point may be indicated by a proprietary or user data flag included within the program stream. In any event, the query at step 310 is used to determine if a commercial is due to soon be displayed on the viewers display device. If the query at step 310 is answered negatively, then the routine 300 proceeds to step 308. If the query at step 310 is answered affirmatively, then the routine 300 proceeds to step 312.

At step 312 a switch, or splice, is made from the presently selected program stream to the presently selected commercial stream. That is, the audio visual information presented to the viewer is changed from the selected program stream to the demographically appropriate commercial stream identified at step 305. If the default commercial is used, then there is no switching operation. This switch in streams is made in a relatively seamless manner according to, e.g., the methods described in U.S. patent application serial no. 08/864,322, corresponding to EP Application No. 97929747.0, EP Publication No. 0 901 718. Briefly, buffers within the set top terminal are used to "buffer up" a portion of the presently selected program stream, and, optionally, a portion of the presently selected commercial stream such that the presently selected program stream may be exited at an appropriate out-point, while the presently selected commercial stream may be entered at an appropriate in-point. The routine 300 then proceeds to step 314, where the presently selected commercial stream is displayed upon the display device of the viewer. The routine 300 then proceeds to step 316.

At step 316 a query is made as to whether a new channel has been selected (similar to the query at step 308). If the query at step 316 is answered affirmatively, then the routine 300 proceeds to step 304 where the new program is selected and to step 305 where, if necessary, a new commercial stream (SN) stream is selected. If the query at step 316 is answered negatively, then the routine 300 proceeds to step 318.

At step 318 a query is made as to whether a commercial ending point within the presently selected program stream is approaching or imminent (similar to the query at step 310). That is, a query is made as to whether the commercial stream being presented on the viewers display device will be ending soon. If the query at step 318 is answered negatively, then the routine 300 proceeds to step 316. If the query at step 318 is answered affirmatively, then the routine 300 proceeds to step 320.

At step 320 a switch is made from the presently selected commercial stream to the presently selected program screen in the manner descnbed above with respect to step 312. That is, a relatively seamless switch between the streams is made such that undesirable visual and/or audible artifacts are not presented to the viewer. The routine 300 then proceeds to step 306.

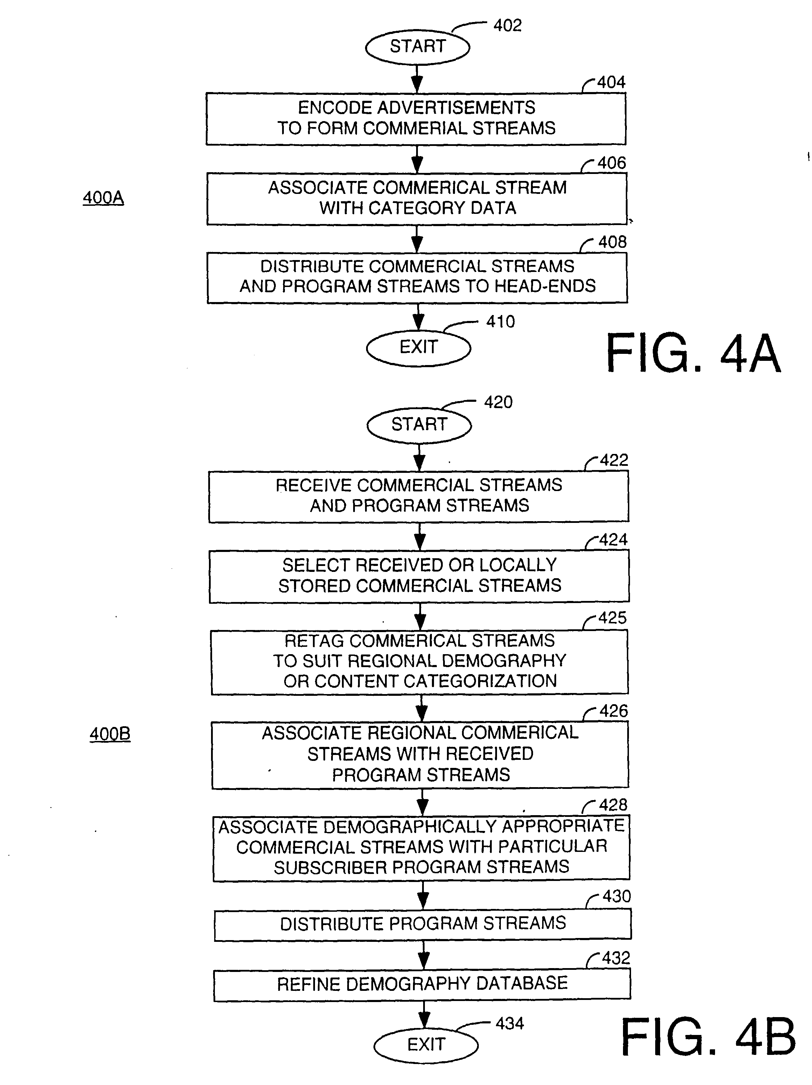

FIG. 4A depicts a flow diagram of a routine suitable for use in a head end module according to an embodiment of the present invention and suitable for use in the information distribution system 100 of FIG. 1. Specifically, FIG. 4A depicts a flow diagram of a routine 400A suitable for use in the "virtual head-end" described above with respect to FIG. 1. The routine 400A is entered at step 402 and proceeds to step 404. At step 404 advertisements are encoded to form commercial streams by, e.g., compression modules 110-1 through 110-N. The routine 400A then proceeds to step 406.

At step 406 the commercial streams are associated with respective category data, illustratively, category indicative tags indicative of a demographic profile or profiles of subscribers or viewers likely to be responsive to the respective associated commercial streams. As previously noted, category data may be used to identify the respective commercial stream as being of interest to particular demographic profiles. The routine 400A then proceeds to step 408.

At step 408 the commercial streams and associated category data, along with program streams, are distributed to head-ends within the information distribution system. That is, referring to the exemplary embodiment of FIG. 1, a plurality of commercial streams associated with respective category data are multiplexed and transmitted via the satellite link 160 to one or more head-end modules 170-1 through 170-X along with a plurality of compressed program streams. The decision regarding which commercial stream(s) are coupled to which subscriber(s), or segment of subscribers, along with which program stream(s) may be determined at the information server, the head-end, or at the set top terminal or receiver.

The commercial streams received via the satellite link include, as previously noted, default commercials that may or may not be appropriate to particular demographic segments. However, as a practical matter, it is unlikely that the default commercials are offensive to any particular demographic segment. The category data associated with the non-default commercial streams indicates which demographic segments might benefit from the reception of the respective associated commercial streams. The head end utilises this data to determine the appropriate distribution pattern of commercial streams.

FIG. 4B depicts a flow diagram of a routine suitable for use in an information server according to an embodiment of the present invention and suitable for use in the information distribution system 100 of FIG. 1. Specifically, FIG. 4A depicts a flow diagram of a routine 400A suitable for use in the head-end modules described above with respect to FIG. 1. The routine 400B is entered at step 420 and proceeds to step 422, where the plurality of "tagged" commercial streams and the plurality of program streams produced by the central information server are received. As previously noted, the central information server or "virtual head-end" provides program streams associated with or including "default" commercial streams. That is, the program streams received by the head-end include advertising or commercial streams. Additionally, the head-end receives demographic target indicative tagging or other indicia (i.e., category data) associated with each non-default commercial stream. The routine 400B then proceeds to step 424.

At step 424 the head-end selects one ore more received or locally stored commercial streams for subsequent transmission to one or more subscribers within the information distribution system. That is, each subscriber within the information distribution system may receive a plurality or commercial streams along with a plurality of program streams. Each program stream includes program material and default advertising material aligned temporally in a known manner.

Auxiliary information streams (e.g., having different program identification (PID) numbers) comprising commercial streams are also transmitted to subscribers. These streams are aligned in a manner temporally complimentary to the commercial material within the program streams provided to the subscribers. An example of such a complementary temporal alignment is described above with respect to FIG. 2. Additionally, the auxiliary information streams include tagging and/or other indicia of demographic appropriateness. If the head-end selects a received commercial stream, then the program stream the received commercial streams are to be coupled to one or more appropriate subscribers. If the head-end selects locally stored commercial streams, then a locally stored commercial stream are to be coupled to one or more appropriate subscribers in lieu of, or in addition to, the received commercial stream(s). The routine 400B then proceeds to optional step 425.

At optional step 425, the selected regional streams are re-tagged to suit regional demographic of content categorisation parameters. In one embodiment of the invention, this optional re-tagging is performed according to data stored in the database 180 (i.e., demographic or response function data). In another embodiment of the invention, this optional re-tagging is performed using data included with received commercial streams. For example, in the previous case of the fast food restaurant having different demographic affinity based on geographic location (e.g., low income rural and high income urban affinity), such affinity information may be included within commercial stream transmitted to a head end. The head end, upon receiving the affinity information, optionally retags the commercial stream(s) based upon the tastes or preferences of the subscribers or users served by the head end (e.g., as indicated by the response function information stored in database 180). The routine 400B then proceeds to step 426.

At step 426 regional commercial streams are associated with received program streams, if necessary. That is, in a case of an advertiser wishing to target a particular region, namely, a region served by a particular head-end within the information distribution system, advertising or commercial streams associated with that region are associated with the received program streams. Regional commercial streams may be received from the central information server or may be stored locally. The routine 400B then proceeds to step 428.

At step 428 demographically appropriate commercial streams are associated with particular subscriber program streams based on, e.g., content of particular program streams (e.g., adult content) or commercial streams based upon, e.g., prior subscriber buying and/or viewing habits and/or demographic information related to the particular subscriber and stored within the demographic data base at the head-end. The routine 400B then proceeds to step 430.

At step 430 the program streams and any associated commercial streams are distributed to appropriate subscribers within the portion of the information distribution system served by the particular head-end. The routine 400B then proceeds to optional step 432.

At optional step 432, the demographic database is refined by, e.g., interacting with individual set top terminals associated with particular subscribers. Additionally, the demographic database is refined by noting which information streams are requested by a particular subscriber, the duration of viewing of a particular information requested by the subscriber, the content of the particular information stream and other demographic indicative information. The routine 400B then proceeds to step 434 where it is exited.

In an ATSC broadcast environment, each channel is provided with 6 MHz spectral allocation that is capable of providing, e.g., a 19.4 megabits per second (Mbps) bitstream to a television receiver. An embodiment of the invention will be described below with respect to FIG. 5 in which the available bandwidth is temporally divided into a program portion and a commercial portion. During the program portion, the information stream delivers to an information consumer movies, television shows or other information streams. During the commercial portion, the information stream delivers to the information consumer a plurality of commercial or adverting streams, one of which is selected for presentation to the viewer according to a demographic profile matching process (e.g., the above-described "tagging" process).

FIG. 5 depicts a broadcast information distribution system 500 according to an embodiment of the invention. Specifically, FIG. 5 depicts an embodiment of invention adapted to use within a broadcast television environment, such as an ATSC or DTB television environment. The information distribution system 500 comprises a plurality of compression modules 502-1 through 502-3 and 505, a multiplexer 510 a channel coder 520, a modulator 530, a transmission antenna 540, a reception antenna 550, a first RF tuner, demodulator and decoder 560, an optional auxiliary RF tuner, demodulator and decoder 560X, a transport receiver 570 and a selective PID demultiplexer and decoder 580.

Compression modules 502-1, 502-2 and 502-3 compress respective commercial or advertising streams COMM1, COMM2 and COM3 to produce respective compressed output streams HDC1, SDC1 and SDC2. In the embodiment of the FIG. 5, compression module 502-1 comprises a high definition (or near high definition) compression module, while compression modules 502-2 and 502-3 comprise standard definition compression modules. Thus, output stream HDC1 comprises a high definition commercial stream, while output streams SDC1 and SDC2 comprise standard definition commercial streams. Compression module 505 comprises a high definition compression module that compresses a program stream PROG1 to produce a compressed program stream HDP1.

The high definition commercial stream HDC1, first standard definition commercial stream SDC1, second standard definition commercial stream SDC2 and a high definition program stream HDP1 are coupled to the multiplexer 510. The multiplexer 510, in response to a control signal CONTROL produced by a controller (not shown), multiplexes the four streams to produce an output stream T1, illustratively an MPEG transport stream. The transport stream T1 is temporally divided into alternating program portions and commercial portions periods. During the program portion, the information stream delivers to an information consumer a movie, television show or other information stream. During the commercial portion, the information stream delivers to the information consumer a plurality of commercial or adverting streams, one of which is selected for presentation to the viewer according to a demographic profile matching process (e.g., the above-described "tagging" process).

During each of the program portion and the commercial portion, the fixed bandwidth of a subsequent delivery channel (e.g., the 19.4 Mbps broadcast channel) may fully utilised by the bandwidth requirements of either the compressed high definition program stream HDP1, or the compressed and multiplexed commercial streams HDC1, SDC1 and SDC2. That is, the three commercial streams depicted in the exemplary embodiment of FIG. 5 (HDTC1, SDC1, SDC2) are encoded and multiplexed in a manner that substantially utilises the full bandwidth of the subsequent delivery channel. Moreover, the multiplexed commercial streams and the program stream are inserted into the multiplexer output stream T1 at the appropriate temporal points.

The output of multiplexer 510 is coupled to an input of channel coder 520, where it is coded to a particular broadcast channel. Similarly, channel coder 520 receives a plurality of transport streams produced by, e.g., other multiplexers (not shown), depicted as transport streams T2 through TN. Channel coder 520 channel codes each of the received transport streams to produce respective channel coded streams CT1 through CTN.

Modulator 530 receives each of the channel coded streams CT1 through CTN and responsively modulates each channel coded stream onto an appropriate RF carrier. The RF carrier is coupled to a antenna 540 for terrestrial broadcast. Alternatively, the RF carrier is propagated to information consumers via cable television, satellite fibre optic or other communications systems. The actual transmission technique or medium utilised is not important, since embodiments of the invention are suitable for use in many information distribution environments.

A television receiver or set top terminal receives the transmitted RF signal via antenna 450. The first (560) and optional auxiliary (560X) RF tuner, demodulate and decode units include the necessary tuner and carrier recovery circuit (not shown) for demodulating a received channel corresponding to , e.g., the transmitted RF signal. The first (560) and optional auxiliary (560X) RF tuner, demodulate and decode units also include the necessary symbol recovery circuitry and other circuitry (not shown) for producing a first reconstructed transport stream RT and, optionally, a second reconstructed transport stream RT', corresponding to transport stream T1 (or T2 through TN).

A transport receiver 570 converts the fixed-length transport package into, e.g., variable-length packetized elementary stream (PES) packets to produce a multiplexed packetized elementary stream MP. The multiplexed packetized elementary stream MP includes video, audio and other information included within the transport stream T1. That is, the multiplexed packetized elementary stream MP includes a high definition program HDP1 during a first or program temporal portion, and the three commercial streams HDC1, SDC1 and SDC2 multiplexed (i.e., denoted by unique packet identification (PID identifiers) during a second or commercial temporal portion. The multiplexed packetized elementary stream MP is coupled to a selective PID demultiplex and decode unit 580.

The selective PID demultiplex and decode unit 580, in response to a control signal SELECTION CRITERIA produced by a controller (not shown), selects, during program mode of operation, the video and audio streams associated with the high definition program stream HDP1. During a commercial mode of operation, the selective PID demultiplex and decode unit 580 selects one of the, illustratively three, commercial streams (HDC1, SDC1 and SDC2) included within the multiplexed packetized elementary stream MP. The particular commercial stream selected for presentation to the viewer is that commercial stream most closely adhering to selection criteria appropriate to, e.g., a demographic profile or other selection criteria for the receiving information consumer.

As previously discussed, the commercial streams may include "tags" indicative of demographic appropriateness of the content in the tagged stream. The selection criteria control signal is used to select one of the commercial streams based upon the tagging or other criteria. Thus, by matching the demographic or content categorisation tags associated with a commercial stream or program stream to a profile "template" of a subscriber of group of subscribers, commercials and/or programming may be directed to the appropriate subscriber(s). The profile "template" may be modified based upon subsequent refinement based on, e.g., response data and other data.

In one embodiment of the invention, selection criteria is based upon the quality and/or cost of the television receiver itself. That is, a high end television receiver, e.g., a large screen or otherwise expensive model) may be used to select commercial streams associated with higher end products. Conversely, a low end or low cost television receiver may be used to select commercial streams associated with low end products. As an example, if a car manufacturer has purchased all commercial time within a particular program, the car manufacturer may include three different commercials for different products. For example, the high definition commercial stream HDC1 may be associated with a luxury brand, while the standard definition commercial streams SDC1 and SDC2 may be associated with a truck, minivan or low cost vehicle brand. In this embodiment, a high end television system will first select the high definition commercial stream for viewing. Thus, the demographic selection may be made inherent by encoding the luxury brand using the HD encoder 502-1. Alternatively, the luxury brand may be associated with a tag and encoded b one of the SD encoders 502-2 and 502-3.

If optional auxiliary RF tuner, demodulate and decode unit 560X is used, then selective PID demultiplex and decode unit 580 is provided with an additional group of commercial streams for selection. In this embodiment of the invention, a plurality of logical streams carried on a plurality of physical channels may be utilised. In this embodiment, optional auxiliary RF tuner, demodulate and decode unit 560X is advantageously employed to provide more accurate selection due to the availability of additional commercial streams. That is, there is a greater likelihood of receiving a demographically appropriate commercial stream since there is a greater number of streams received.

It must be noted that the embodiment of FIG. 5 depicts a high definition commercial stream multiplexed with two standard definition commercial streams to occupy the bandwidth normally associated with a single high definition stream. Such compression is possible where the high end standard definition commercial streams are subjected to additional processing or compression steams. For example, since many commercials are filmed in a "film mode" comprising 24 frames per second, while the transmission format may comprise 30 or 60 frames per second, the amount of bandwidth necessary for each stream may be reduced by not encoding redundant video material (i.e., the extra six frames per second). Similarly, the high definition stream HDC1 may not be as high a definition stream as the actual high definition program stream HDP1. Such reductions in "definition" may be achieved by low pass filtering, sub-sampling, interpolation and other techniques. In effect, the high definition commercial stream HDC1 may be reduced in quality to a level above the standard definition commercial streams SDC1 and SDC2, much below the high definition program stream HDP1.

In one embodiment of the invention a compression module 502 comprising the HD compression module 502-1 and the two SD compression modules 502-2 and 502-3 comprises a "ensemble" compressor. The ensemble compressor includes a plurality of statistical multiplexers which are used to coordinate a statistical measures of bandwidth utilization for each of the compressed commercial streams HDC1, SDC1 and SDC2. In this manner, statistical multiplexing techniques normally utilised to adapt a compression rate of a single compression module to an available bandwidth are used to adapt the compression rate of three compression units to the available bandwidth in a controllable manner. In one embodiment of the invention, the ensemble compressor 502 adapts the compression rate in a manner favouring the high definition channel( i.e., preferentially allocating bits to compression module 502-1). It must be noted that the ensemble compressor 502 does not necessarily need to operate in "real time." Thus, ensemble compressor 502 may utilise a very high quality compression routine (i.e., a compression routine normally too slow to process real time information given finite processing and/or memory constraints) such that a very high quality compressed stream is formed.

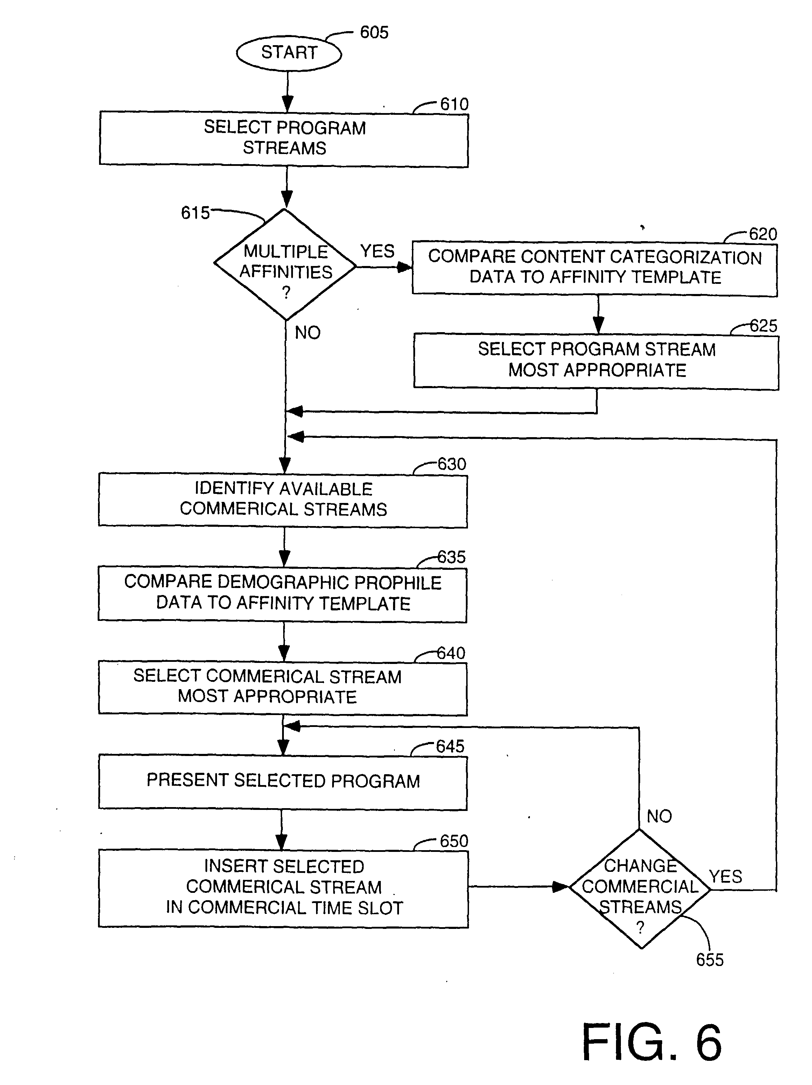

FIG. 6 depicts a flow diagram of a routine suitable for use in an information receiver or set top terminal according to an embodiment of the present invention. The routine 600 is entered at step 605 and proceeds to step 610.

At step 610 a user or subscriber selects a particular program stream or streams for viewing. As previously discussed, a broadcaster or information provider may provide multiple versions of the same program, where each version has been tailored in some way to appear to a different demographic sensibility. For example, in the case of a news broadcast, one version may be more heavily weighted towards business people, while another version may be more heavily weighted towards those interested in sports. Similarly, one version of the same news program may be censored in a manner removing extreme, violent or other material deemed inappropriate for a particular demographic segment (i.e., children or those offended by what they perceive as gratuitous violence). The routine 600 then proceeds to step 615.

At step 615, a query is made as to whether multiple affinities exist. That is, a query is made as to whether the selected program stream is one of a plurality of associated program streams that are differentiated from each other in that each of the plurality of associated program streams has respective content categorisation, tagging or other affinity indicative data. If the query at step 615 is answered negatively, then the routine 600 proceeds to step 630. If the quire at step 615 is answered affirmatively, then the routine 600 proceeds to step 620.

At step 620 the content categorisation data of the selected program streams is compared to an affinity template (i.e., a content categorisation affinity template). The affinity template includes information indicative of the demographic makeup or preferred content form of a subscriber or user within the information distribution system. The routine 600 then proceeds to step 625.

At step 625 a one of the available program streams is selected. That is, the program stream having, preferably, the most appropriate content categorisation with respect to the affinity template is selected for subsequent presentation on, e.g., a display device. The routine 600 then proceeds to step 630.

At step 630 the available commercial streams are identified. For example, in the case of a physical channel including a plurality of commercial streams identified as logical streams within the physical channel, the demographic or content categorisation tags within the commercial streams are identified. In the case of an information receiver or set-top terminal employing multiple tuners or other physical channel selection apparatus, commercial streams available via some or all of the physical channel selection apparatus are identified. The routine 600 then proceeds to step 635.

At step 635 the demographic profile data associated with the commercial streams identified at step 630 is compared to the affinity template (i.e., demographic data affinity template) associated with the information subscriber. The routine 600 then proceeds to step 640.

At step 630 the commercial stream most appropriate to the particular subscriber as indicated by the matching or lack of matching of the demographic profile data to the affinity templates is made. That is, a particular commercial or commercial stream that is appropriate to a particular viewer is selected for presentation during a commercial portion of the selected program stream. The routine 600 then proceeds to step 645.

At step 645, the selected program is presented on, e.g., the information subscriber's display device. The routine 600 then proceeds to step 650.

At step 650 the selected commercial stream is inserted into the displayed program stream at the appropriate commercial time slow. That is, the demographically appropriate commercial stream selected at step 640 is inserted into the displayed program stream selected at step 625 or 610 during the commercial time slot portion of the program stream. The routine 600 then proceeds to step 655.

At step 655 a query is made as to whether the selected commercial streams should be changed. That is, a query is made as to whether a different one of the identified available commercial streams should be selected for subsequent presentation. Alternatively, the selected commercial stream may change based upon a new viewer ( e.g., the selected program stream changes from children's programming to adult content, thereby indicating that adult commercial streams are appropriate). The query at step 655 is answered negatively, then the routine 600 proceeds to step 645. If the query at step 655 is answered affirmatively, then the routine 600 then proceeds to step 630.

It must be noted that the term "set top terminal," as used in the above description, also describes the functionality of an information receiver (e.g., a video and audio information receiver) integrated within a television set or provided as an audio-video component within an information receiver system. Thus, the term should not in any way be construed as limiting the scope of the present invention. Similarly, the terms "subscriber," "viewer," "information consumer" and other like terms are intended to broadly describe any end user entity receiving information streams, including those information streams formed and/or delivered according to the teachings of the invention.

Although various embodiments which incorporate the teachings of the present invention have been shown and described in detail herein, those skilled in the art can readily devise many other varied embodiments that still incorporate these teachings.

## Claims

1. In an information distribution system comprising information provider equipment and information consumer equipment, a method for providing information comprising the steps of:
compression encoding a plurality of commercials to produce a respective plurality of compressed commercial streams;
compression encoding one or more programs to produce a respective one or more compressed program streams, said one or more compressed program streams being temporally divided into alternating commercial portions and program portions, said program portions of said compressed program stream being defined by an initial stream entry point and a terminating stream exit point; and
providing, to said information consumer equipment, said plurality of compressed commercial streams and said one or more compressed program streams;
said terminating stream exit point of said program portion of said compressed program stream being substantially temporally aligned with at least one stream entry point in each of said plurality of compressed commercial streams;
said initial stream entry point of said program portion of said compressed program stream being substantially temporally aligned with at least one stream exit point in each of said plurality of compressed commercial streams.

2. The method of claim 1, wherein each of said plurality of commercial streams includes indicia of demographic or content categorisation affinity.

3. The method of claim 2, further comprising the step of:
modifying, prior to processing by said information consumer equipment, said included indicia of demographic or content categorisation affinity.

4. The method of claim 3, wherein:
said modification is made in response to at least one of a regional demographic or content categorisation information.

5. The method of claim 1, wherein said step of providing comprises the steps of:
multiplexing said plurality of compressed commercial streams to form a multiplexed compressed commercial stream;
multiplexing said one or more program streams to form a multiplexed program stream; and
coupling said multiplexed compressed commercial stream and said multiplexed program stream to at least one head end within said information distribution system, said head end further distributing said multiplexed compressed commercial stream and said multiplexed program stream to one or more information consumers.

6. The method of claim 5, wherein said at least one head end provides additional compressed commercial streams to said user, said additional compressed commercial streams being stored at said at least one head end and including appropriately aligned stream entry points and stream exit points.

7. The method of claim 1, wherein:
said information consumer equipment selects, for presentation during said commercial portion of said compressed program stream, a compressed commercial stream exhibiting a high level of demographic or content categorisation affinity to said information consumer;
said program portion of said compressed program stream being exited at a respective terminating exit point; and
said selected commercial stream being entered at a respective entry point, said respective entry point being substantially temporally aligned with said respective terminating exit point.

8. The method of claim 7, wherein:
upon presenting some or all of said compressed commercial stream, a temporally following program portion of said compressed program stream is entered at a respective initial entry point;
said selected commercial stream being exited at a respective exit point, said respective exit point being substantially temporally aligned with said respective initial entry point of said temporally following program portion of said compressed program stream.

9. The method of claim 1, wherein:
said information consumer equipment selects, for presentation during said commercial portion of said compressed program stream, a compressed commercial stream exhibiting a high level of demographic or content categorisation affinity to said information consumer.

10. The method of claim 7, wherein said level of demographic affinity is determined with respect to a demographic information stored within a demographic database.

11. The method of claim 10, wherein said demographic database is stored at a head end of said information distribution system, said demographic database being updated to reflect one or more of information consumer programming choices, information consumer purchase choices, information consumer demographic data input, regional demographic data and information consumer equipment data.

12. In a digital television receiver, a method comprising the steps of:
selecting, for presentation, one of a plurality of available television programs, said selected television program temporally divided into a commercial portion and a program portion, said commercial portion including a plurality of commercial streams, at least a portion of said commercial streams including indicia of demographic affinity;
comparing, to a demographic profile, said indicia of demographic affinity of said commercial streams including indicia of demographic affinity; and
selecting, for presentation during said commercial portion of said selected television program, a commercial stream having indicia of demographic affinity appropriate to said demographic profile;
said selected television program and said selected commercial stream being aligned in a manner enabling a relatively seamless transition between streams.

13. The method of claim 12, wherein one or more of said plurality of available television programs includes indicia of content categorisation, and said step of selecting a television program comprises the steps of:
comparing, to a content categorisation profile, said indicia of demographic affinity of said available television programs;
selecting, for presentation, said television program having indicia of content categorisation affinity most appropriate to said content categorisation profile.

14. An information distribution apparatus comprising:
means for compression encoding a plurality of commercials to produce a respective plurality of compressed commercial streams;
means for compression encoding one or more programs to produce a respective one or more compressed program streams, said one or more compressed program streams being temporally divided into alternating commercial portions and program portions, said program portions of said compressed program stream being defined by an initial stream entry point and a terminating stream exit point; and
means for providing, to said information consumer equipment, said plurality of compressed commercial streams and said one or more compressed program streams;
said terminating stream exit point of said program portion of said compressed program stream being substantially temporally aligned with at least one stream entry point in each of said plurality of compressed commercial streams;
said initial stream entry point of said program portion of said compressed program stream being substantially temporally aligned with at least one stream exit point in each of said plurality of compressed commercial streams.

15. A set top controller for use in an information distribution system as claimed in claim 1, said set top box comprising:
means for selecting, for presentation, one of a plurality of available television programs, said selected television program temporally divided into a commercial portion and a program portion, said commercial portion including a plurality of commercial streams, at least a portion of said commercial streams including indicia of demographic affinity;
means for comparing, to a demographic profile, said indicia of demographic affinity of said commercial streams including indicia of demographic affinity; and
means for selecting, for presentation during said commercial portion of said selected television program, a commercial stream having indicia of demographic affinity appropriate to said demographic profile;
said selected television program and said selected commercial stream being aligned in a manner enabling a relatively seamless transition between streams.
